# EUROPÄISCHE PATENTSCHRIFT

(11) **EP 0 814 965 B1**
(45) Veröffentlichungstag und Bekanntmachung des Hinweises auf die Patenterteilung: **20.10.1999**
(21) Anmeldenummer: 96908046.4
(22) Anmeldetag: 15.03.1996
(51) Int. Cl.: B60H 1/00, G05G 1/28

(54) **BEDIENGERÄT FÜR EINE KRAFTFAHRZEUG-KLIMAAUTOMATIK**
OPERATING SYSTEM FOR A MOTOR VEHICLE AUTOMATIC AIR-CONDITIONING SYSTEM
APPAREIL DE COMMANDE POUR SYSTEME AUTOMATIQUE DE CLIMATISATION POUR VEHICULE

(30) Priorität: 31.03.1995 DE 29505606 U
(43) Veröffentlichungstag der Anmeldung: 07.01.1998
(73) Patentinhaber: Valeo Klimasysteme GmbH, 96473 Rodach (DE)
(72) Erfinder: SCHRAMM, Michael, D-96465 Neustadt (DE)
(74) Vertreter: COHAUSZ HANNIG DAWIDOWICZ & PARTNER
(86) Internationale Anmeldenummer: EP9601119
(87) Internationale Veröffentlichungsnummer: WO9630225

(56) Entgegenhaltungen:
- EP-A- 0 414 948
- EP-A- 0 605 324
- DE-A- 3 640 608
- DE-A- 3 914 627
- DE-U- 9 300 295
- US-A- 5 220 805

## Beschreibung

Die Erfindung bezieht sich auf ein Bediengerät für eine Kraftfahrzeug-Klimaautomatik gemäß Patentanspruch 1.

Ein Bediengerät für eine Kraftfahrzeugklimaautomatik ist z.B. aus der DE-A-39 146 27 bekannt. Das Bediengerät enthält zwei drehbare koaxiale Betätigungsknöpfe, die außen am Gehäuse überstehen, sowie zwei koaxiale Wellen, eine innere und eine äußere, die drehbeweglich mit den beiden Betätigungsknöpfen verbunden sind, und über die eine Einstellung der Temperatur und der Verteilung der Luft in der Fahrzeugkabine erfolgt. Als weiteres Merkmal enthält das Bediengerät zwei drehbeweglich mit den beiden Wellen verbundene Anzeigetrommeln, die im Inneren des Bediengerätes angeordnet sind und Symbole tragen, die sich im Verhältnis zu zwei Fenstern verschieben, welche in einer Vorderwand des Gehäuses des Bediengerätes eingearbeitet sind. Weiterhin rasten die beiden Betätigungsknöpfe bei einer Verstellung in stabilen und genau definierten Winkelpositionen ein.

Darüber hinaus ist aus der US-A-5 220 805 ein Bediengerät für eine Klimaautomatik bekannt, bei dem die üblichen Parameter einer Klimaanlage, wie z.B. die 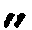 Luftverteilung", die 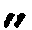 Luftmenge" und die 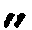 Lufttemperatur" über endlos drehbare Drehknöpfe eingestellt wird. Hierbei werden die Sollstellungen im manuellen Betrieb und die Iststellungen im automatischen Betrieb durchdigital gesteuerte Symbole angezeigt. Bei einer Drehung des Drehknopfes wird die Nachführung der digitalen Symbole mittels einer Rechnersteuerung vorgenommen, die die Änderung des gewünschten Klimaanlagenparameters aus der ursprünglichen Position, der Drehrichtung und der Drehweite ermittelt. Bei einer Veränderung der Klimaanlagenparameter durch einen manuellen Eingriff in die automatische Steuerung in Folge einer Drehung des Drehknopfes wird es als nachteilig empfunden, daß die Veränderung aufgrund der Rechnersteuerung nur in diskreten digitalisierbaren Schritten erfolgt. Aufgrund der groben Digitalisierung wird eine einfache und sichere Einstellung des gewünschten Parameters verhindert.

Bei weiteren bekannten Ausführungen einer Klimaautomatik kann z.B. in die automatische Regelung von Hand dadurch eingegriffen werden, daß durch manuelle Betätigung einer Vielzahl von Drucktasten oder einer vielfachen Betätigung von Wipptasten die Gebläsedrehzahl und damit der Wert für die Luftmenge verstellbar ist. Die Anzeige der derart in Override-Funktion manuell eingestellten Werte erfolgt über LCD-Displays. Ãhnliche Displays sind vorgesehen, um im reinen Automatikbetrieb den jeweils von der Automatik angewählten Istwert anzuzeigen.

Gemäß Aufgabe vorliegender Erfindung soll die Einstell- und Erkennungsmöglichkeit von manuell einstellbaren Werten für 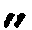 Luftverteilung" bzw. 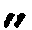 Luftmengen" und gegebenenfalls 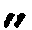 Lufttemperatur" einfacher und sicherer gestaltet werden.

Die Lösung der vorgenannten Aufgabe gelingt erfindungsgemäß durch ein Bediengerät mit den Merkmalen des Anspruchs 1; vorteilhafte Ausgestaltungen der Erfindung sind jeweils Gegenstand der Unteransprüche.

Bei der erfindungsgemäßen Ausführung des Bediengerätes, die einen automatischen und manuellen Einstellbetrieb aufweist, ist als Sollwert-Einstellmittel für die 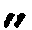 Luftverteilung" und/oder die 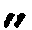 Luftmenge" und/oder die 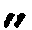 Lufttemperatur" jeweils eine manuell verstellbare analoge Sollwert-Einstellvorrichtung vorgesehen, durch die eine einfache manuelle Einstell-Handhabung ermöglicht wird. Als Anzeigemittel für die 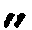 Luftverteilung" und/oder die 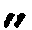 Luftmenge" ist jeder analogen Sollwert-Einstellvorrichtung jeweils eine analoge Anzeigevorrichtung zugeordnet, die im manuellen Einstellbetrieb durch einen unabhängigen Fremdantrieb entsprechend dem eingestellten Sollwert als Sollwert-Anzeigevorrichtung unmittelbar analog nachgeführt wird, was eine eindeutige und schnelle Ablesung des eingestellten Wertes gewährleistet. Beim Übergang in den automatischen Einstellbetrieb durch Betätigung einer Automatiktaste führt der unabhängige Fremdantrieb die Anzeigevorrichtung entsprechend dem jeweiligen Istwert von 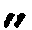 Luftverteilung" und/oder 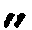 Luftmenge" als Istwert-Anzeigevorrichtung unmittelbar analog nach, wodurch das vorher bei manueller Einstellung als Sollwert-Anzeige benutzte Anzeigemittel im Automatikbetrieb als Istwert-Anzeige mitbenutzbar ist.

Zweckmäßigerweise werden zur Erzielung einer einerseits einfachen und sicheren Einstellung und Ablesung bzw. andererseits kompakten Bauform als Sollwert-Einstellvorrichtung jeweils ein Drehknopf vorgesehen, dem konzentrisch zumindest über einen Teilumfang eine Skalenanzeige für das Sollwert-Anzeigemittel bzw. Istwert-Anzeigemittel zugeordnet ist. Gemäß einer bevorzugten Ausgestaltung der Erfindung sind durch getrennten Antrieb nachgeführte Sollwert-Anzeigemittel bzw. Istwert-Anzeigemittel für die 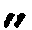 Luftverteilung" und/oder 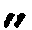 Luftmenge" vorgesehen, während als Temperatur-Einstellmittel eine nachgeführte Anzeige unterbleibt; in besonders kompakter Bauform ist dazu als Temperatur-Einstellmittel ein dem Drehknopf für die 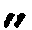 Luftverteilung" und/oder 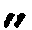 Luftmenge", vorzugsweise zu zumindest einem Drehknopf der 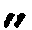 Luftverteilung", konzentrischer Drehring, insbesondere in Form eines Außenringes mit zugeordneter feststehender ringförmiger Anzeigeskala, vorgesehen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- Fig. 1: die Frontblenden-Ansicht einer ersten erfindungsgemäßen Ausführung eines Bediengerätes;
- Fig. 2: im Teilausschnitt die senkrechte Draufsicht von oben auf das Bediengerät gemäß Fig. 1;
- Fig. 3: die Frontblenden-Ansicht einer zweiten erfindungsgemäßen Ausführung eines Bediengerätes;
- Fig. 4: im Teilausschnitt die senkrechte Draufsicht von oben auf das Bediengerät gemäß Fig. 3;

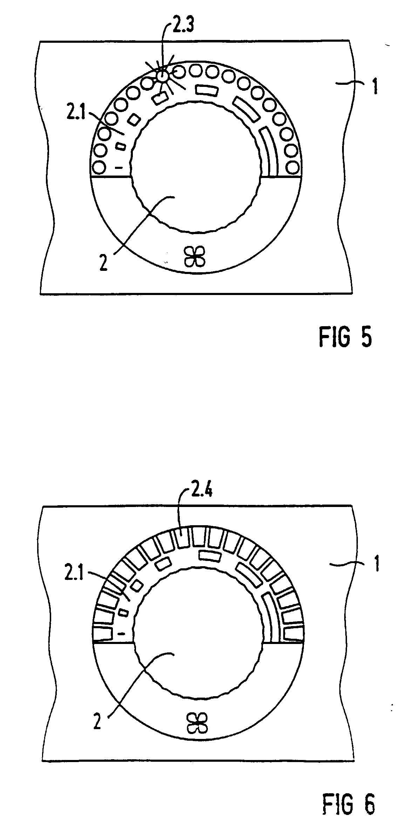

- Fig. 5: einen ersten Teilausschnitt der Draufsicht auf das Bediengerät gemäß Fig. 1, 2 mit einer Leuchtdiodenanzeige für die Einstellung der 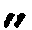 Luftmenge";
- Fig. 6: einen zweiten Teilausschnitt der Draufsicht auf das Bediengerät gemäß Fig. 1, 2 mit einer LCD-Felderanzeige für die Einstellung der 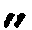 Luftmenge".

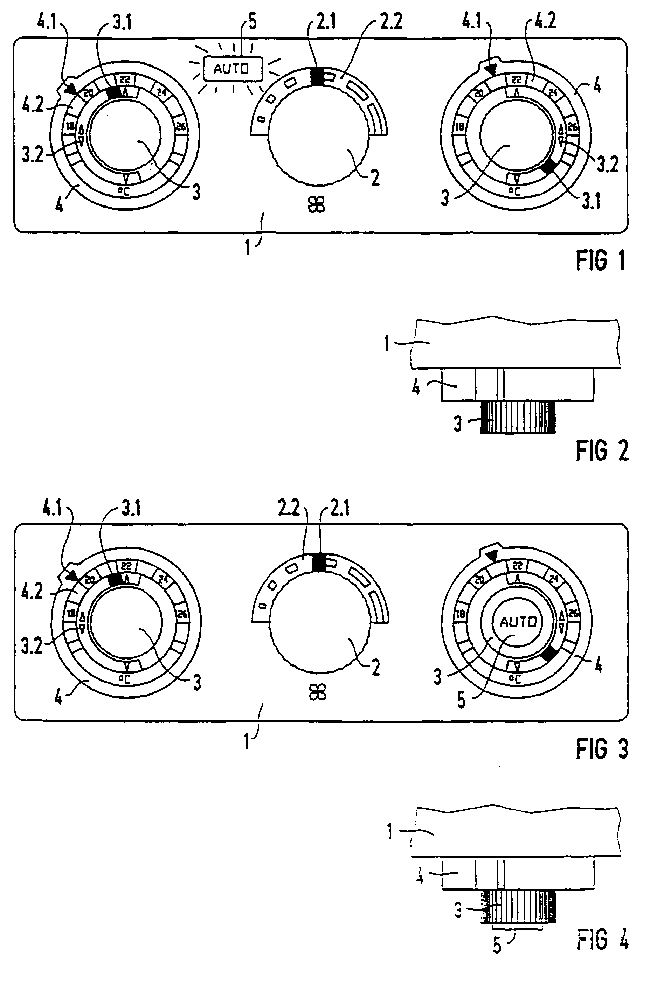

Fig. 1 zeigt die Draufsicht auf eine Frontblende eines Bediengerätes einer Kraftfahrzeug-Klimaautomatik mit manuellen Einstellmitteln in Override-Funktion zur Automatik in Form eines mittleren Drehknopfes 2 zur Einstellung der 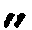 Luftmenge" durch Veränderung der Gebläsedrehzahl, sowie je einen linken Drehknopf 3 und einen rechten Drehknopf 3 für die 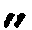 Luftverteilung" für die linke bzw. für die rechte Fahrzeughälfte sowie eines Drehringes 4 zur Einstellung der 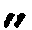 Lufttemperatur". Als Sollwert-Anzeigemittel im manuellen Einstell-Betrieb bzw. Istwert-Anzeigemittel im Automatik-Betrieb ist gemäß Fig. 1 für den Drehknopf 2 für die 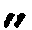 Luftmenge" ein von einem getrennten Antrieb nachgeführter Anzeigezeiger 2.1 bzw. für den jeweiligen Drehknopf 3 für die 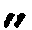 Luftverteilung" ein Anzeigezeiger 3.1 vorgesehen, wobei die Anzeigezeiger 2.1 bzw. 3.1 entlang fest angeordneter Anzeigeskalen 2.2 bzw. 3.2 geführt werden, die z.B. in transparenter Ausführung vor den Anzeigeskalen angeordnet sind; zum selbständigen Antrieb der ohne mechanische Verbindung zu den Drehknöpfen nachgeführten Anzeigezeiger dient in, insbesondere für eine voll umlauffähige Einstellung und Anzeige über 360°, vorteilhafter Weise ein entsprechend angesteuerter Schrittmotor. Anstelle des Schrittmotors kann z.B. auch in besonders aufwandsarmer Bauart ein Drehspulinstrument vorgesehen werden.

Die Automatikfunktion der Klimaautomatik steht in Ausschaltabhängigkeit von der manuellen Betätigung der Sollwert-Einstellmittel in Form der Drehknöpfe 2 bzw. 3 für 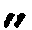 Luftmenge" durch Veränderung der Gebläsedrehzahl des Luftventilators bzw. für 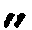 Luftverteilung", nach vorheriger manueller Betätigung der Sollwert-Einstellmittel in Form der Drehknöpfe 2 bzw. 3 ist die Automatik jederzeit durch Betätigung eines Automatik-Einschaltmittels, insbesondere in Form eines Einstell-Drucktasters 5, wieder einschaltbar. Der Einstell-Drucktaster 5 kann entweder nach Fig. 1 als im frontseitigen Bedienfeld des Bediengerätes 1 getrennt angeordnetes Bauteil oder zur Erzielung einer besonders großen Kompaktheit mit zumindest einem der Drehknöpfe 2 bzw. 3 dadurch integriert sein, daß er radial innen im Drehknopf 3 für die 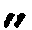 Luftverteilung" axial bewegbar angeordnet ist.

Im Automatik-Betrieb zeigen die Anzeigezeiger den jeweiligen Istwert entsprechend der automatischen Regelung an. Wird nun die manuelle Einstellvorrichtung, insbesondere in Form der Drehknöpfe 2 bzw. 3 in irgend eine Richtung gedreht, schaltet das Gerät bezüglich der betreffenden Funktion des Drehknopfes die Automatik aus und übernimmt sofort den letzten Wert als manuelle Ersteinstellung. Von diesem Wert ausgehend folgen die Anzeigezeiger in vorteilhafter örtlicher Zuordnung zu ihren Einstellmitteln ohne praktisch merkliche Verzögerung in Form einer Sollwert-Anzeige. Wird durch Betätigung des Automatik-Einschaltmittels, insbesondere in Form des Drucktasters 5, auf Automatik-Betrieb zurückgeschaltet, regelt die Automatik die entsprechenden Werte nach ihrem eingegebenen Programm. Die Anzeigezeiger bewegen sich auf neue automatikspezifische Werte und zeigen als Istwert-Anzeigevorrichtung den jeweiligen von der Automatik eingeregelten Wert an.

Wie insbesondere aus Fig. 2 bzw. Fig. 4 ersichtlich, sind die konzentrisch zu einer gleichen Achse bzw. Welle angeordneten Einstell- bzw. Anzeigemittel zumindest zum Teil mit unterschiedlich axialer Betätigungsebene ausgebildet, derart daß sie zur manuellen Betätigung beim Greifen einfach identifizierbar und handhabbar sind.

Anstelle der mechanischen Anzeigezeiger 2.1 bzw. 3.1 für die 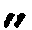 Luftmengen" bzw. 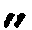 Luftverteilung" gemäß Fig. 1 sind nach besonderen Ausgestaltungen der Erfindung gemäß Fig. 4 entsprechend den jeweiligen Sollwerten bzw. den Istwerten verstellbare Zeiger in Form von je nach Zeigerstellung eingeschalteter Leuchtdioden 2.3 bzw. aktivierter LCD-Feldern 2.4 vorgesehen.

Als Temperatur-Einstellmittel ist jeweils ein zu dem Drehknopf 3 für die 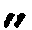 Luftverteilung" konzentrisch drehbar angeordneter Drehring 4 für 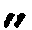 Lufttemperatur" mit einem Anzeigezeiger 4.1 vorgesehen, der relativ zu einem feststehenden Temperatur-Skalenring 4.2 verstellbar ist.

## Patentansprüche

1. Bediengerät für eine Kraftfahrzeug-Klimaautomatik mit Einstellmitteln und Anzeigemitteln zumindest für die "Luftverteilung", die "Luftmenge" und die "Lufttemperatur" mit folgenden Merkmalen:
a)- Die Klimaautomatik weist einen automatischen und einen manuellen Einstell-Betrieb auf,
b) als Sollwert-Einstellmittel für die "Luftverteilung" und/oder die "Luftmenge" und/oder die "Lufttemperatur" ist jeweils eine manuell verstellbare analoge Sollwert-Einstellvorrichtung (2,3,4) vorgesehen,
c) als Anzeigemittel für die "Luftverteilung" und/oder die "Luftmenge" ist jeder analogen Sollwert-Einstellvorrichtung (2,3) jeweils eine analoge Anzeigevorrichtung (2.1, 2.2; 2.1, 2.3; 2.1, 2.4) zugeordnet,
d) im manuellen Einstell-Betrieb führt ein unabhängiger Fremdantrieb die Anzeigevorrichtung entsprechend dem eingestellten Sollwert als Sollwert-Anzeigevorrichtung unmittelbar analog nach,
e) im automatischen Einstell-Betrieb führt der unabhängige Fremdantrieb die Anzeigevorrichtung entsprechend dem jeweiligen Istwert von "Luftverteilung" und/oder "Luftmenge" als Istwert-Anzeigevorrichtung unmittelbar analog nach.

2. Bediengerät nach Anspruch 1 mit dem Merkmal:
d) Als Sollwert-Einstellvorrichtung für 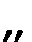 Luftmenge" bzw. 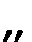 Luftverteilung" ist jeweils ein Drehknopf (2 bzw. 3) vorgesehen;
e) als Sollwert- bzw. Istwert-Anzeigevorrichtung für 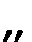 Luftmenge" bzw. 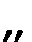 Luftverteilung" ist jeweils ein konzentrisch zu dem Drehknopf (2 bzw.3) durch Fremdantrieb relativ zu einer feststehenden Anzeigeskala (2.2 bzw.3.2) nachgeführter Anzeigezeiger (2.1 bzw. 3.1) vorgesehen.

3. Bediengerät nach einem der vorhergehenden Ansprüche mit dem Merkmal:
f) Die Automatikfunktion der Klimaautomatik steht in Ausschaltabhängigkeit von der manuellen Betätigung der Sollwert-Einstellvorrichtung (2 bzw. 3) für 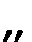 Luftverteilung" und/oder 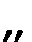 Luftmenge".

4. Bediengerät nach einem der vorhergehenden Ansprüche mit dem Merkmal:
g) Die Automatikfunktion der Klimaautomatik steht nach vorheriger manueller Betätigung der Sollwert-Einstellvorrichtung (2 bzw. 3) in Einschaltsbhängigkeit von einem manuell betätigbaren 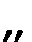 Automatik-Einschaltmittel", insbesondere einem Einstell-Drucktaster (5).

5. Bediengerät nach einem der vorhergehenden Ansprüche 2-4 mit dem Merkmal:
h) Als Temperatureinstellmittel ist ein zu dem Drehknopf (2 bzw. 3) konzentrischer drehbar angeordneter Drehring (4), insbesondere in Form eines Außenringes, vorgesehen.

6. Bediengerät nach dem vorhergehenden Anspruch mit dem Merkmal:
i) Der Drehring (4) ist als Außenring konzentrisch zu dem Drehknopf (3) für 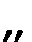 Luftverteilung" ausgebildet.

7. Bediengerät nach einem der vorhergehenden Ansprüche 5 bzw. 6 mit dem Merkmal:
j) Radial zwischen dem Drehring (4) für 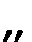 Lufttemperatur" und dem Drehknopf (3) für 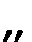 Luftverteilung" ist eine ringförmige Anzeigeskala (4.1) für 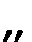 Lufttemperatur" angeordnet, der ein drehringsseitiges Anzeigemittel (4.2) für 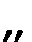 Lufttemperatur", insbesondere ein Anzeigezeiger (4.2), zugeordnet ist.

8. Bediengerät nach einem der vorhergehenden Ansprüche 2-7 mit dem Merkmal:
k) Das Automatik-Einschaltmittel, insbesondere in Form eines Einschalt-Drucktasters (5), ist konzentrisch zu einem der Drehknöpfe (2 bzw. 3), insbesondere konzentrisch zu zumindest einem Drehknopf (3) für die 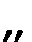 Luftverteilung" angeordnet.

9. Bediengerät nach einem der vorhergehenden Ansprüche 2-8 mit dem Merkmal:
l) Die konzentrisch zu einer gleichen Achse bzw. Welle angeordneten Einstell- bzw. Anzeigemittel sind zumindest teilweise mit unterschiedlicher axialer Betätigungsebene ausgebildet.

10. Bediengerät nach einem der vorhergehenden Ansprüche 2-9 mit dem Merkmal:
m) Die Anzeigemittel bestehen aus Anzeigeskalen (2.1 bzw. 3.1 bzw. 4.1) zugeordneten, entsprechend dem jeweiligen Sollwert bzw. Istwert verstellten Zeigern (2.2 bzw. 3.2 bzw. 4.2) bzw. aus eingeschalteten Leuchtdioden (2.3) bzw. aus aktivierten LCD-Feldern (2.4).

## Claims

1. An operating system for an automatic air-conditioning unit having adjustment means and display means at least for the "air distribution", the "air volume" and the "air temperature" with the following features:
a) the automatic air-conditioning unit comprises an automatic and a manual adjustment mode,
b) a manually adjustable analogue set value adjustment device (2, 3, 4) is provided in each case as the set value adjustment means for the "air distribution" and/or the "air volume" and/or the "air temperature",
c) as display means for the "air distribution" and/or the "air volume" an analog display device (2.1, 2.2; 2.1, 2.3; 2.1, 2.4) is associated with each analogue set value adjustment device (2,3),
d) in the manual adjustment mode an independent external drive directly analogously tracks the display device according to the adjusted set value as set value display device,
e) in the automatic adjustment mode the independent external drive directly analogously tracks the display device according to the respective actual value of "air distribution" and/or "air volume" as actual value display device.

2. An operating system according to Claim 1 with the feature:
d) a rotary knob (2 and 3 respectively) is provided as a set value adjustment device for "air volume" and "air distribution" respectively;
e) a pointer (2.1 or 3.1 respectively), which is tracked by external drive in relation to a fixed display scale (2.2 or 3.2 respectively) concentrically to the rotary knob (2 or 3), is provided as the set value or actual value display device for "air volume" or "air distribution".

3. An operating system according to one of the preceding Claims with the feature:
f) the automatic function of the automatic air-conditioning unit is in turn-off dependence on the manual actuation of the set value adjustment device (2 and 3 respectively) for "air distribution" and/or "air volume".

4. An operating system according to one of the preceding Claims with the feature:
g) the automatic function of the automatic air-conditioning unit is, after prior manual actuation of the set value adjustment device (2 or 3 respectively), in turn-on dependence on a manually actuated "automatic turning-on means", in particular an adjustment push-button key (5).

5. An operating system according to one of the preceding Claims 2-4 with the feature:
h) a rotatably disposed rotary ring (4) concentric to the rotary knob (2 or 3 respectively), in particular in the form of an outer ring, is provided as temperature adjustment means.

6. An operating system-according to the preceding Claim with the feature:
i) the rotary ring (4) is constructed as an outer ring concentrically to the rotary knob (3) for "air distribution".

7. An operating system according to one of the preceding Claims 5 or 6 respectively with the feature:
j) disposed radially between the rotary ring (4) for "air temperature" and the rotary knob (3) for "air distribution" is an annular display scale (4.1) for "air temperature", with which there is associated a display means (4.2) for "air temperature" on the side close to the rotary ring, in particular a pointer (4.2).

8. An operating system according to one of the preceding Claims 2-7 with the feature:
k) the automatic turn-on means, in particular in the form of a turn-on push-button key (5), is disposed concentrically to one of the rotary knobs (2 or 3 respectively), in particular concentrically to at least one rotary knob (3) for the "air distribution".

9. An operating system according to one of the preceding Claims 2-8 with the feature:
l) the adjustment or display means disposed concentrically to the same axis or shaft are constructed at least partially with a different axial plane of actuation.

10. An operating system according to one of the preceding Claims 2-9 with the feature:
m) the display means consist of pointers (2.2 and 3.2 and 4.2 respectively) associated with display scales (2.1 and 3.1 and 4.1 respectively) and adjusted according to the respective set value or actual value or of turned-on light-emitting diodes (2.3) or of activated LCD fields (2.4)

## Revendications

1. Appareil de commande pour un système automatique de climatisation pour véhicule, avec des moyens de réglage et des moyens d'affichage au moins pour la 〈〈 répartition de l'air 〉〉, la 〈〈 quantité d'air 〉〉 et la 〈〈 température de l'air 〉〉, avec les caractéristiques suivantes :
a) Le système automatique de climatisation présente un mode de réglage automatique et un mode de réglage manuel,
b) Un dispositif de réglage analogique de la valeur de consigne (2, 3, 4), réglable manuellement, est respectivement prévu comme moyen de réglage de la valeur de consigne pour la 〈〈 répartition de l'air 〉〉 et/ou la 〈〈 quantité d'air 〉〉 et/ou la 〈〈 température de l'air 〉〉,
c) Un dispositif d'affichage analogique (2.1, 2.2 ; 2.1, 2.3 ; 2.1, 2.4) est respectivement associé, comme moyen d'affichage pour la 〈〈 répartition de l'air 〉〉 et/ou la 〈〈 quantité d'air 〉〉, à chaque dispositif de réglage analogique de la valeur de consigne (2, 3),
d) En mode de réglage manuel, une commande externe indépendante assure une poursuite analogique directe du dispositif d'affichage, comme dispositif d'affichage de la valeur de consigne, en fonction de la valeur de consigne réglée,
e) En mode de réglage automatique, la commande externe indépendante assure une poursuite analogique directe du dispositif d'affichage, comme dispositif d'affichage de la valeur effective, en fonction de la valeur effective respective de la 〈〈 répartition de l'air 〉〉 et/ou de la 〈〈 quantité d'air 〉〉.

2. Appareil de commande suivant la revendication 1 avec la caractéristique :
d) Un bouton tournant (2 respectivement 3) est respectivement prévu comme dispositif de réglage de la valeur de consigne pour la 〈〈 quantité d'air 〉〉 respectivement la 〈〈 répartition de l'air 〉〉,
e) Un indicateur (2.1 respectivement 3.1), poursuivi concentriquement au bouton rotatif (2 respectivement 3) par une commande externe par rapport à un cadran d'affichage fixe (2.2 respectivement 3.2), est respectivement prévu comme dispositif d'affichage de la valeur de consigne et/ou de la valeur effective pour la 〈〈 quantité d'air 〉〉 respectivement la 〈〈 répartition de l'air 〉〉.

3. Appareil de commande suivant l'une des revendications précédentes avec la caractéristique :
f) La fonction automatique du système automatique de climatisation est en relation de déconnexion de la commande manuelle du dispositif de réglage de la valeur de consigne (2 respectivement 3) pour la 〈〈 répartition de l'air 〉〉 respectivement la 〈〈 quantité d'air 〉〉.

4. Appareil de commande suivant l'une des revendications précédentes avec la caractéristique :
g) Après la commande manuelle préalable du dispositif de réglage de la valeur de consigne (2 respectivement 3), la fonction automatique du système automatique de climatisation est en relation de connexion d'un 〈〈 moyen de commutation automatique 〉〉 actionnable manuellement, en particulier d'un bouton-poussoir de réglage (5).

5. Appareil de commande suivant l'une des revendications précédentes 2 à 4 avec la caractéristique :
h) Une bague rotative (4), concentrique au bouton tournant (2 respectivement 3), en forme notamment d'une bague externe, est prévue comme moyen de réglage de la température.

6. Appareil de commande suivant la revendication précédente avec la caractéristique :
i) La bague rotative (4) est réalisée sous forme de bague externe concentrique au bouton tournant (3) pour la 〈〈 répartition de l'air 〉〉.

7. Appareil de commande suivant l'une des revendications précédentes 5 et 6 avec la caractéristique:
j) Un cadran d'affichage annulaire (4.1) pour la 〈〈 température de l'air 〉〉 est disposé dans le sens radial entre la bague rotative (4) pour la 〈〈 température de l'air 〉〉 et le bouton tournant (3) pour la 〈〈 répartition de l'air 〉〉, cadran auquel est associé un moyen d'affichage (4.2) côté bague rotative pour la 〈〈 température de l'air 〉〉, un indicateur (4.2) en particulier.

8. Appareil de commande suivant l'une des revendications précédentes 2 - 7 avec la caractéristique :
k) Le moyen de connexion automatique, en forme notamment d'un bouton-poussoir de commutation (5), est disposé concentriquement par rapport à l'un des boutons tournants (2 respectivement 3), en particulier concentriquement par rapport au moins à un bouton tournant (3) pour la 〈〈 répartition de l'air 〉〉.

9. Appareil de commande suivant l'une des revendications précédentes 2 - 8 avec la caractéristique :
l) Les moyens de réglage respectivement d'affichage, disposés concentriquement par rapport à un même axe respectivement arbre, sont réalisés, en partie au moins, avec un plan de d'actionnement axial différent.

10. Appareil de commande suivant l'une des revendications précédentes 2 - 9 avec la caractéristique :
m) Les moyens d'affichage se composent d'indicateurs (2.2 respectivement 3.2 respectivement 4.2), associés à des cadrans d'affichage (2.1 respectivement 3.1 respectivement 4.1) et réglés en fonction de la valeur de consigne respectivement de la valeur effective respective, respectivement de diodes électroluminescentes (2.3) commutées respectivement de panneaux ACL activés (2.4).
